(19) Europäisches Patentamt
European Patent Office
Office européen des brevets

(11) **EP 3 165 077 B1**

(12) **EUROPÄISCHE PATENTSCHRIFT**

(45) Veröffentlichungstag und Bekanntmachung des Hinweises auf die Patenterteilung:
**19.02.2020 Patentblatt 2020/08**

(51) Int Cl.:
**A01D 41/127** *(2006.01)*     **A01D 43/08** *(2006.01)*

(21) Anmeldenummer: **16192753.8**

(22) Anmeldetag: **07.10.2016**

(54) **VERFAHREN ZUR ANSTEUERUNG EINER LANDWIRTSCHAFTLICHEN ARBEITSMASCHINE**

METHOD FOR CONTROLLING AN AGRICULTURAL MACHINE

PROCÉDÉ DE COMMANDE D'UN ENGIN AGRICOLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.11.2015 DE 102015014273**

(43) Veröffentlichungstag der Anmeldung:
**10.05.2017 Patentblatt 2017/19**

(73) Patentinhaber: **CLAAS Selbstfahrende Erntemaschinen GmbH**
**33428 Harsewinkel (DE)**

(72) Erfinder:
• **Bormann, Bastian**
**33334 Gütersloh (DE)**
• **Middelberg, René**
**49080 Osnabrück (DE)**

(74) Vertreter: **CLAAS Gruppe**
**Mühlenwinkel 1**
**33428 Harsewinkel (DE)**

(56) Entgegenhaltungen:
**EP-A1- 2 995 190     WO-A1-87/04894**
**US-A- 5 855 108**

**Beschreibung**

Die vorliegende Erfindung betrifft ein Verfahren zur Ansteuerung einer landwirtschaftlichen Arbeitsmaschine gemäß dem Oberbegriff von Anspruch 1 sowie eine solche landwirtschaftliche Arbeitsmaschine gemäß dem Oberbegriff von Anspruch 15. Ein derartiges Verfahren und eine derartige landwirtschaftliche Arbeitsmaschine ist z.B. aus dem Dokument US 5,855,108 bekannt.

Bei der in Rede stehenden landwirtschaftlichen Arbeitsmaschine kann es sich um jedwede landwirtschaftliche Arbeitsmaschine handeln, die mit einer Steuerungseinrichtung, mit mindestens einem Arbeitsorgan und mit einem Hauptantrieb für den Antrieb des Arbeitsorgans ausgestattet ist. Dazu gehören bspw. selbstfahrende Erntemaschinen, insbesondere Feldhäcksler, Mähdrescher o. dgl. Weiter sind von diesem Begriff nicht selbstfahrende Anbaugeräte sowie die Kombination der jeweiligen Zugmaschine mit dem Anbaugerät umfasst.

Die landwirtschaftliche Arbeitsmaschine aus GB 911,361 A ist mit einem Hauptantrieb und mehreren dem Hauptantrieb antriebstechnisch nachgeschalteten Arbeitsorganen wie einem Schrägförderer oder einer Dreschtrommel eines Mähdreschers ausgestattet. Die antriebstechnische Kopplung zwischen dem Hauptantrieb und den Arbeitsorganen ist jeweils über einen Antriebsstrang vorgesehen. Bei der bekannten Arbeitsmaschine ist dem Schrägförderer eine Überwachungseinrichtung zugeordnet, die basierend auf der Auslenkung eines Trägers des Schrägförderers durchlaufenden Gutstrom und damit die Belastung des Schrägförderers erfasst. Basierend auf dieser Erfassung steuert die Steuerungseinrichtung die Arbeitsmaschine im Übrigen an. Diese Art der Ansteuerung der Arbeitsmaschine erfordert mit der Auslenkbarkeit des dem Schrägförderer zugeordneten Trägers eine aufwendige Konstruktion, die mit vergleichsweise hohen Kosten verbunden ist.

Der Erfindung liegt das Problem zugrunde, das bekannte Verfahren zur Ansteuerung einer landwirtschaftlichen Arbeitsmaschine derart auszugestalten und weiterzubilden, dass die Ansteuerung belastungsabhängig vorgenommen werden kann, ohne dass hierfür aufwendige konstruktive Maßnahmen getroffen werden müssen.

Das obige Problem wird bei einem Verfahren zur Ansteuerung einer landwirtschaftlichen Arbeitsmaschine gemäß dem Oberbegriff von Anspruch 1 durch die Merkmale des kennzeichnenden Teils von Anspruch 1 gelöst.

Wesentlich ist die grundsätzliche Überlegung, dass die Belastung des Arbeitsorgans basierend auf der jeweiligen Leerlaufübersetzung ermittelt werden kann, sofern verschiedene konstruktive Randbedingungen eingehalten werden. Hierzu gehört, dass der Antriebsstrang je nach Antriebsstrangzustand eine reale, also messbare Übersetzung zwischen dem Hauptantrieb und dem Arbeitsorgan erzeugt. Mit "Übersetzung" ist vorliegend stets eine Getriebeübersetzung gemeint.

Der Antriebsstrangzustand wird vorliegend durch die Leerlaufübersetzung repräsentiert, die der Antriebsstrang in dem jeweiligen Antriebsstrangzustand im Leerlauf, also im abtriebsseitig lastfreien Zustand, erzeugt. Sofern, wie vorliegend angenommen, die reale Übersetzung im Lastbetrieb von der Leerlaufübersetzung abweicht, lässt sich aus dieser Abweichung die Belastung des Arbeitsorgans ermitteln, ohne dass hierfür zusätzliche konstruktive Maßnahmen getroffen werden müssen.

Die obige Ermittlung der Belastung des Arbeitsorgans bedeutet aber auch, dass die Leerlaufübersetzung bei das Arbeitsorgan betreffende Drehzahlanpassungen, die auf eine Änderung des Antriebsstrangzustands zurückgehen, eine entsprechende Nachführung der Leerlaufübersetzung erfordern. Andernfalls würde die Belastung des Arbeitsorgans unter Berücksichtigung einer fehlerhaften Leerlaufübersetzung ermittelt werden, was entsprechend zu einer fehlerhaften Ermittlung der Belastung führen würde.

Im Einzelnen wird nun vorgeschlagen, dass mittels der Steuerungseinrichtung die Belastung des Arbeitsorgans unter Berücksichtigung der jeweiligen Leerlaufübersetzung überwacht wird und bei Identifikation von kritischen Betriebszuständen das Arbeitsorgan betreffende Drehzahlanpassungen vorgenommen werden, wobei nach erfolgter Drehzahlanpassung die neue Leerlaufübersetzung ermittelt wird, so dass die Überwachung der Belastung stets auf realitätsnahen Belastungswerten erfolgt. Dabei wird davon ausgegangen, dass die jeweilige Drehzahlanpassung durch eine Veränderung des Antriebsstrangzustands des Antriebsstrangs, die weiter vorzugsweise durch eine entsprechende Ansteuerung des Antriebsstrangs mittels der Steuerungseinrichtung erfolgt, bewirkt wird.

Die Abweichung der realen Übersetzung von der jeweiligen Leerlaufübersetzung im Lastbetrieb kann durch unterschiedliche Effekte verursacht sein. Ein Beispiel ist das Auftreten von Schlupf in einem Riementrieb, der dem Antriebsstrang zugeordnet sein kann.

Der Antriebsstrang ist hier ansteuerbar ausgestaltet, so dass sich der Antriebsstrangzustand mittels der Steuerungseinrichtung verstellen lässt. Damit ist im vorliegenden Sinne mittels der Steuerungseinrichtung eine Verstellung der realen Übersetzung des Antriebsstrangs möglich.

Die bevorzugten Ausgestaltungen gemäß den Ansprüchen 2 bis 4 zeigen bevorzugte Möglichkeiten zur Ermittlung der Leerlaufübersetzung auf. Es handelt sich in allen drei Fällen um eine indirekte Erfassung des Antriebsstrangzustands, so dass auf einen separaten Sensor für die Erfassung des Antriebsstrangzustands verzichtet werden kann.

Im einfachsten Fall gemäß Anspruch 2 wird die Arbeitsmaschine ohne Erntegutstrom betrieben, derart, dass sich der Betrieb des Antriebsstrangs dem Leerlaufbetrieb annähert. Die Leerlaufübersetzung des Antriebsstrangs lässt sich dann grundsätzlich aus der in diesem Betrieb ermittelten realen Übersetzung ermitteln. Im einfachsten Fall wird die Leerlaufübersetzung näherungsweise der in diesem Betrieb ermittelten realen Übersetzung gleichgesetzt. Diese Art der Ermittlung der Leerlaufübersetzung lässt sich vorteilhaft in einem Vorgewendebereich eines abzuerntenden Feldes umsetzen, in dem die Arbeitsmaschine regelmäßig ohne Erntegutstrom läuft.

Bei der weiter bevorzugten Ausgestaltung gemäß Anspruch 3 ist eine näherungsweise Ermittlung der Leerlaufübersetzung im Lastbetrieb vorgesehen, indem die Leerlaufübersetzung basierend auf der realen Übersetzung in mindestens einem vorbestimmten Betriebspunkt ermittelt wird. Vorzugsweise ist es hier vorgesehen, dass die Leerlaufübersetzung näherungsweise der realen Übersetzung in einem Betriebspunkt mit besonders geringer ermittelter Belastung gleichgesetzt wird, da sich dieser Betriebspunkt wiederum dem Leerlaufbetrieb annähert.

Die weiter bevorzugte Variante zur Ermittlung der Leerlaufübersetzung gemäß Anspruch 4 sieht eine Art Extrapolation einer zuvor ermittelten Leerlaufübersetzung basierend auf einer vorangegangen Ansteuerung des Antriebsstrangs vor. Hierdurch ist eine Ermittlung der Leerlaufübersetzung auch während der Verstellung des Antriebsstrangzustands ohne Weiteres möglich.

Mit der weiter bevorzugten Ausgestaltung gemäß Anspruch 5 ergibt sich eine besonders einfache Möglichkeit zur Ermittlung der Belastung des Arbeitsorgans. Sofern der Abweichungswert für die Abweichung der realen Übersetzung von der Leerlaufübersetzung zumindest über einen Betriebsbereich proportional zu der Belastung des Arbeitsorgans ist, lässt sich die Belastung leicht von dem Abweichungswert ableiten.

Die weiter bevorzugten Ausgestaltungen nach den Ansprüchen 6 bis 8 betreffen unterschiedliche bevorzugte Auslegungsvarianten für den Antriebsstrang. Bei der besonders bevorzugten Ausgestaltung gemäß Anspruch 7 weist der Antriebsstrang mindestens eine Getriebekomponente zur Erzeugung einer Getriebeübersetzung auf, die mittels der Steuerungseinrichtung zur Verstellung der Getriebeübersetzung ansteuerbar ist. Hierdurch lassen sich die oben angesprochenen Drehzahlanpassungen auf besonders einfache Weise steuerungstechnisch umsetzen. Bei der weiter bevorzugten Ausgestaltung gemäß Anspruch 8 handelt es sich bei einer Getriebekomponente des Antriebsstrangs um einen Riementrieb, dem ein Riemenvariator zur Verstellung der Getriebeübersetzung zugeordnet ist. Grundsätzlich kann es vorgesehen sein, dass ein solcher Riementrieb nur eine von mehreren Komponenten des Antriebsstrangs bereitstellt.

Wie oben angesprochen, nimmt die Steuerungseinrichtung bei der Identifikation von kritischen Betriebszuständen das Arbeitsorgan betreffende Drehzahlanpassungen vor. Alternativ oder zusätzlich kann es vorgesehen sein, dass die Erfassung solcher kritischer Betriebszustände eine Abschaltung des Hauptantriebs auslöst (Anspruch 9). Dies hängt davon ab, wie schwerwiegend die Auswirkung des jeweiligen, kritischen Betriebszustands im Hinblick auf die Betriebssicherheit der Arbeitsmaschine ist.

Die weiter bevorzugten Ausgestaltungen gemäß den Ansprüchen 13 und 14 betreffen vorteilhafte Zeitpunkte für die Ermittlung der Leerlaufübersetzung bzw. der Belastung des Arbeitsorgans. Besondere Bedeutung kommt der Erkenntnis gemäß Anspruchs 14 zu, dass die Leerlaufübersetzung und die Belastung asynchron zueinander ermittelt werden können, da die Leerlaufübersetzung ja nur nachgeführt werden muss, wenn sich der Antriebsstrangzustand, insbesondere durch eine entsprechende Ansteuerung mittels der Steuerungseinrichtung, ändert.

Nach einer weiteren Lehre gemäß Anspruch 15, der eigenständige Bedeutung zukommt, wird eine landwirtschaftliche Arbeitsmaschine, die für die Durchführung des vorschlagsgemäßen Verfahrens geeignet ist, als solche beansprucht.

Wesentlich für die vorschlagsgemäße Arbeitsmaschine ist die Auslegung der Steuerungseinrichtung derart, dass mittels der Steuerungseinrichtung die Belastung des Arbeitsorgans unter Berücksichtigung des jeweiligen Leerlaufübersetzungsverhältnisses überwacht wird und bei Identifikation von kritischen Betriebszuständen das Arbeitsorgan betreffende Drehzahlanpassungen vorgenommen werden und nach erfolgter Drehzahlanpassung die neue Leerlaufübersetzung ermittelt wird. Insoweit darf auf alle Ausführungen zu dem vorschlagsgemäßen Verfahren verwiesen werden.

Im Folgenden wird die Erfindung anhand einer lediglich ein Ausführungsbeispiel darstellenden Zeichnung näher erläutert. In der Zeichnung zeigt

Fig. 1    eine vorschlagsgemäße landwirtschaftliche Arbeitsmaschine zur Durchführung eines vorschlagsgemäßen Verfahrens in einer ganz schematischen Seitenansicht,

Fig. 2    während einer das Arbeitsorgan betreffende Drehzahlanpassung a) die den Hauptantrieb betreffende Drehzahl $n_{in}$ b) die das Arbeitsorgan betreffende Drehzahl $n_{out}$ sowie die reale Übersetzung u, c) die Leerlaufübersetzung i und d) den Abweichungswert S sowie die resultierende Belastung B.

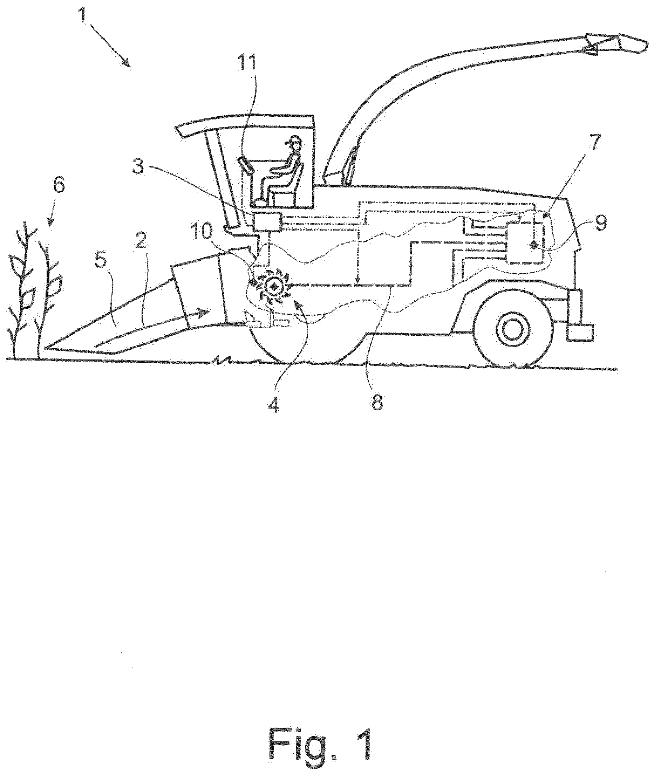

Das vorschlagsgemäße Verfahren ist auf die Ansteuerung einer landwirtschaftlichen Arbeitsmaschine 1 gerichtet, bei der es sich um jedwede landwirtschaftliche Arbeitsmaschine handeln kann. Hier und vorzugsweise dient die landwirtschaftliche Arbeitsmaschine 1 der Aufnahme und Verarbeitung eines Erntegutstroms 2, der in Fig. 1 lediglich angedeutet ist. Eine solche Arbeitsmaschine 1 kann bspw. eine selbstfahrende Erntemaschine, insbesondere ein Mähdrescher oder ein Feldhäcksler sein. Bei dem dargestellten Ausführungsbeispiel handelt es sich bei der Arbeitsmaschine 1 um einen Feldhäcksler, was nicht beschränkend zu verstehen ist.

Die Arbeitsmaschine 1 ist mit einer Steuerungseinrichtung 3 ausgestattet, die der Ansteuerung mindestens eines Arbeitsorgans 4 dient. In Fig. 1 ist beispielhaft das als Häckselwerk ausgestaltete Arbeitsorgan 4 dargestellt. Andere Arbeitsorgane sind eine dem Häckselwerk 4 nachgeschaltete Fördereinrichtung, ein dem Häckselwerk 4 vorgeschaltetes Vorsatzgerät 5 zur Aufnahme von Erntegut 6 o. dgl.

Im Sinne einer vereinfachten Darstellung ist im Folgenden stets von lediglich einem einzigen Arbeitsorgan 4 die Rede. Alle diesbezüglichen Ausführungen gelten für alle anderen, eventuell vorhandenen Arbeitsorgane entsprechend.

Die in Fig. 1 dargestellte Arbeitsmaschine 1 ist ferner mit einem Hauptantrieb 7 für den Antrieb des Arbeitsorgans 4 ausgestattet, wobei ein Antriebsstrang 8 vorgesehen ist, der eine antriebstechnische Kopplung zwischen dem Arbeitsorgan 4 und dem Hauptantrieb 7 herstellt. Im Arbeitsbetrieb wird das Arbeitsorgan 4 also über den Antriebsstrang 8 von dem Hauptantrieb 7 angetrieben.

Bei dem Hauptantrieb 7 handelt es sich vorzugsweise um einen Verbrennungsmotor, insbesondere um einen Dieselmotor. Grundsätzlich ist es denkbar, dass zwei oder mehr als zwei solcher Hauptantriebe 7 vorgesehen sind. Der Hauptantrieb 7 bzw. die Hauptantriebe 7 ist bzw. sind von der Steuerungseinrichtung 3 ansteuerbar.

Der Antriebsstrang 8 erzeugt je nach Antriebsstrangzustand eine reale Übersetzung zwischen dem Hauptantrieb 7 und dem Arbeitsorgan 4. Zur Ermittlung der realen Übersetzung sind ein Drehgeber 9 für die Erfassung der den Hauptantrieb 7 betreffenden Drehzahl und ein Drehgeber 10 für die Erfassung der das Arbeitsorgan 4 betreffenden Drehzahl vorgesehen. Die Steuerungseinrichtung 3 erzeugt aus dem Quotienten der über die Drehgeber 9, 10 ermittelten Drehzahlen die reale Übersetzung u zwischen dem Hauptantrieb 7 und dem Arbeitsorgan 4.

Der Antriebsstrangzustand beschreibt den mechanischen Zustand des Antriebsstrangs 8, der ursächlich für die resultierende, reale und damit messbare Übersetzung u ist. Hierfür ist der Antriebsstrang 8 vorzugsweise mit einer noch zu erläuternden Getriebekomponente ausgestattet, deren Getriebezustand die reale Übersetzung zwischen dem Hauptantrieb 7 und dem Arbeitsorgan 4 zumindest mitbestimmt.

Vorliegend wird der Antriebsstrangzustand durch eine fiktive Leerlaufübersetzung i repräsentiert. Die Leerlaufübersetzung i entspricht der Übersetzung, die der Antriebsstrang 8 in einem bestimmten Antriebsstrangzustand im Leerlauf, also bei antriebsseitig lastfreiem Betrieb, erzeugt.

Der Antriebsstrang 8 ist hier so getroffen, dass im Lastbetrieb die reale Übersetzung u von der jeweiligen Leerlaufübersetzung i abweicht. Wie oben angedeutet, repräsentiert diese Abweichung die Belastung des Arbeitsorgans 4, so dass aus dieser Abweichung basierend auf der jeweiligen Leerlaufübersetzung i die Belastung des Arbeitsorgans 4 ermittelt werden kann. Am Beispiel des dargestellten Feldhäckslers oder eines Mähdreschers kann die Belastung des Arbeitsorgans 4 wiederum Aufschluss über das Vorhandensein / Nichtvorhandensein eines Gutstroms oder auf die Höhe eines Gutstroms geben. Von besonderer Bedeutung ist dabei allerdings die Tatsache, dass bei einer das Arbeitsorgan 4 betreffenden Drehzahlanpassung, die auf eine Verstellung des Antriebsstrangzustands zurückgeht, stets eine Nachführung der Leerlaufübersetzung i vorgenommen werden muss.

Vorschlagsgemäß wird mittels der Steuerungseinrichtung 3 die Belastung B des Arbeitsorgans 4 wie oben angesprochen unter Berücksichtigung der jeweiligen Leerlaufübersetzung i überwacht. Bei der Identifikation von kritischen Betriebszuständen, wie einem Überlastzustand, werden das Arbeitsorgan 4 betreffende Drehzahlanpassungen vorgenommen. Dies erfolgt hier durch eine noch zu erläuternde Ansteuerung des Antriebsstrangs 8, was mit einer Verstellung des Antriebsstrangzustands und damit einer Änderung der realen Übersetzung u einhergeht. Vorschlagsgemäß ist erkannt worden, dass nach erfolgter Drehzahlanpassung die neue Leerlaufübersetzung i ermittelt werden muss, so dass die nachfolgende Überwachung der Belastung B auf einem dem aktuellen Antriebsstrangzustand entsprechenden Wert für die Leerlaufübersetzung i basiert.

Es sind nun verschiedene bevorzugte Möglichkeiten für die Ermittlung der Leerlaufübersetzung i denkbar, die je nach Betriebszustand gewählt werden können.

Im einfachsten Fall wird die Arbeitsmaschine 1 zur Ermittlung der Leerlaufübersetzung i ohne Erntegutstrom 2 betrieben, wobei die Leerlaufübersetzung i aus der in diesem Betrieb ermittelten realen Übersetzung u zwischen dem Hauptantrieb 7 und dem Arbeitsorgan 4 ermittelt wird.

Vorzugsweise wird in diesem Betrieb die Leerlaufübersetzung i der realen Übersetzung u näherungsweise gleichgesetzt. Ein solcher Leerlaufbetrieb ergibt sich bspw. beim Durchfahren eines Vorgewendebereichs eines abzuerntenden Feldes. Vorzugsweise ist es so, dass die Leerlaufübersetzung i jedenfalls beim Durchfahren des Vorgewendebereichs stets neu ermittelt wird.

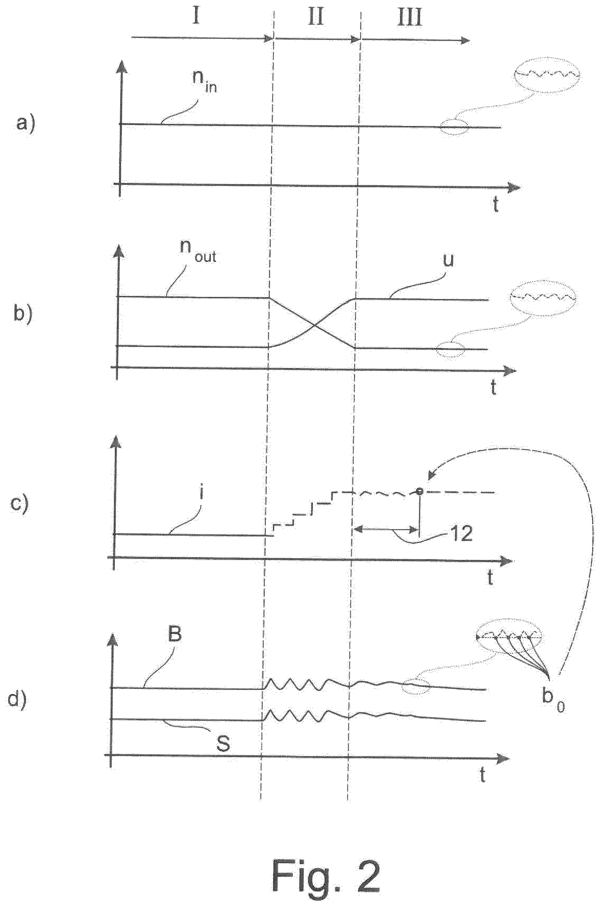

Eine andere bevorzugte Variante ermöglicht die Ermittlung der Leerlaufübersetzung i im Lastbetrieb, also während der Aufnahme und Verarbeitung des Erntegutstroms 2. Hier ist es so, dass die Leerlaufübersetzung i basierend auf der realen Übersetzung u in mindestens einem vorbestimmten Betriebspunkt bo ermittelt wird. Dabei kann der Betriebspunkt bo dadurch definiert sein, dass die Belastung B des Arbeitsorgans 4 unter eine Belastungsgrenze absinkt. Alternativ kann der vorbestimmte Betriebspunkt bo durch das Durchlaufen eines Belastungsminimums definiert sein. Ein solcher Betriebspunkt bo ist in Fig. 2d beispielhaft dargestellt. Die reale Übersetzung u ergibt sich, wie oben angedeutet, stets aus dem Quotienten der über die Drehgeber 9, 10 ermittelten Drehzahlen.

Vorzugsweise wird die Leerlaufübersetzung i der realen Übersetzung u in dem jeweiligen Betriebspunkt bo näherungsweise gleichgesetzt. In besonders bevorzugter Ausgestaltung werden hier die realen Übersetzungen u in mehreren Betriebspunkten $b_o$ ermittelt, wobei die Leerlaufübersetzung i dann vorzugsweise einem Mittelwert über diese realen Übersetzungen u gleichgesetzt wird.

Grundsätzlich kann eine Veränderung der Leerlaufübersetzung i aber auch aus einer zuvor ermittelten Leerlaufübersetzung i und aus einer vorangegangenen Ansteuerung des Antriebsstrangs 8 ermittelt werden. Dies entspricht in erster Näherung einem Extrapolationsverfahren.

Eine bevorzugte Variante für die Ermittlung der Belastung des Arbeitsorgans 4 im Rahmen der vorschlagsgemäßen Überwachung geht darauf zurück, dass mittels der Steuerungseinrichtung 3 aus der den Hauptantrieb 7 betreffenden Drehzahl $n_{in}$, der das Arbeitsorgan 4 betreffenden Drehzahl $n_{out}$ und der Leerlaufübersetzung i ein Abweichungswert S für die Abweichung der realen Übersetzung u von der Leerlaufübersetzung i übermittelt wird. Der Abweichungswert S ist dann vorzugsweise zumindest über einen Betriebsbereich proportional zu der Belastung B des Arbeitsorgans 4. Für die Berechnung des Abweichungswert S ergibt sich vorzugsweise die folgende Formel:

$$S = 100\% \times (1 - (n_{out}/n_{in}) \times i)$$

Dabei entspricht die Leerlaufübersetzung i dem Quotienten aus $n_{in}$ und $n_{out}$ im Leerlaufbetrieb.

Für den Fall, dass der Antriebsstrang 8 ausschließlich einen Riementrieb aufweist, repräsentiert der Abweichungswert S den prozentualen Schlupf des Riementriebs, der vorzugsweise zumindest über einen Betriebsbereich proportional zu der Belastung B des Arbeitsorgans 4 ist.

Der Antriebsstrang 8 zwischen dem Hauptantrieb 7 und dem Arbeitsorgan 4 kann ganz unterschiedliche Komponenten aufweisen. Dazu gehören insbesondere Kupplungskomponenten und Getriebekomponenten. In besonders bevorzugter Ausgestaltung weist der Antriebsstrang 8 mindestens eine Getriebekomponente zur Erzeugung einer Getriebeübersetzung auf. Weiter vorzugsweise ist die Getriebekomponente mittels der Steuerungseinrichtung 3 zur Verstellung der Getriebeübersetzung der Getriebekomponente ansteuerbar. Diese Ansteuerbarkeit kann genutzt werden, um die vorschlagsgemäßen Drehzahlanpassungen bewirken zu können, ohne notwendigerweise die den Hauptantrieb 7 betreffende Drehzahl $n_{in}$ verändern zu müssen.

Vorzugsweise handelt es sich bei der Getriebekomponente um einen nicht dargestellten Riementrieb mit einer dem Hauptantrieb 7 zugeordneten Antriebsscheibe und einer dem Arbeitsorgan 4 zugeordneten Abtriebsscheibe, wobei der Antriebsscheibe und/oder der Abtriebsscheibe ein Riemenvariator zur Verstellung der Getriebeübersetzung zugeordnet ist. Vorzugsweise lässt sich der Riemenvariator wie oben angedeutet mittels der Steuerungseinrichtung 3 ansteuern, so dass die Getriebeübersetzung der Getriebekomponente verstellbar und damit der Antriebsstrangzustand des Antriebsstrangs 8 entsprechend verstellbar ist.

Die vorschlagsgemäße Lösung lässt sich anhand eines Antriebsstrangs 8, der einen Riementrieb aufweist, besonders anschaulich erläutern. Eine Zunahme der Belastung des Arbeitsorgans 4 führt hier zu einer Zunahme des Schlupfes im Riementrieb, die Aufschluss über eine Änderung der Belastung des Arbeitsorgans 4 gibt. Der Schlupf entspricht dem oben angesprochenen Abweichungswert S, zu dessen Ermittlung die Kenntnis der korrekten Leerlaufübersetzung i erforderlich ist. Dies bedeutet, dass spätestens nach einer oben angesprochenen Drehzahlanpassung stets eine vorschlagsgemäße, erneute Ermittlung der Leerlaufübersetzung i erforderlich ist.

Neben der oben angesprochenen Drehzahlanpassung kann es vorzugsweise vorgesehen sein, dass mittels der Steuerungseinrichtung 3 auf die Identifikation vorbestimmter, kritischer Betriebszustände hin eine Abschaltung des Hauptantriebs 7 ausgelöst wird. Dies ist insbesondere sachgerecht, wenn eine Fortsetzung des Betriebs der Arbeitsmaschine 1 zu einem Sach- oder Personenschaden führen würde. Die Abschaltung des Hauptantriebs 7 kann das Stoppen des Hauptantriebs 7 oder aber das Entkuppeln des Hauptantriebs 7 von dem Antriebsstrang 8 bedeuten.

Alternativ oder zusätzlich kann es vorgesehen sein, dass basierend auf der ermittelten Belastung B, insbesondere bei der Identifikation von kritischen Betriebszuständen, mindestens eine Belastungsinformation über eine in Fig. 1 angedeutete Mensch-Maschine-Schnittstelle 11 ausgegeben wird. Eine solche Belastungsinformation kann bspw. ein Warnhinweis sein derart, dass sich ein kritischer Betriebszustand anbahnt.

Die vorbestimmten, kritischen Betriebszustände können in unterschiedlicher Weise definiert sein. Hier und vorzugsweise ist es so, dass ein vorbestimmter kritischer Betriebszustand das Über- oder Unterschreiten eines vorbestimmten Grenzwerts für die Belastung B des Arbeitsorgans 4 umfasst. Das Überschreiten eines vorbestimmten Grenzwerts für die Belastung B des Arbeitsorgans 4 entspricht einem Überlast-Zustand, der vorzugsweise zu einem oben angesprochenen Abschalten des Hauptantriebs 7 führt.

Eine vorschlagsgemäße, das Arbeitsorgan 4 betreffende Drehzahlanpassung ist für verschiedene Mess- und Berechnungsgrößen der Arbeitsmaschine 1 in Fig. 2 dargestellt. Die dortige Drehzahlanpassung teilt sich auf in eine Ausgangsphase I, eine Übergangsphase II und eine Zielphase III. Es lässt sich der Darstellung gemäß Fig. 2a entnehmen, dass die den Hauptantrieb 7 betreffende Drehzahl $n_{in}$ hier über alle Phasen I, II und III konstant bleibt, während die das Arbeitsorgan 4 betreffende Drehzahl $n_{out}$ in der Übergangsphase II absinkt, was hier und vorzugsweise durch eine entsprechende Ansteuerung des Antriebsstrangs 8, insbesondere einer obigen Getriebekomponente des Antriebsstrangs 8, ausgelöst wird. Die resultierende, reale Übersetzung u zwischen dem Hauptantrieb 7 und dem Arbeitsorgan 4 ist ebenfalls der Darstellung gemäß 2b zu entnehmen.

Eine solche Drehzahlanpassung, die durch eine Verstellung des Antriebsstrangzustands ausgelöst wird, erfordert vorschlagsgemäß, dass die Leerlaufübersetzung i entsprechend nachgeführt wird. Dies lässt sich der Darstellung gemäß 2c entnehmen. Im Einzelnen ist es so, dass innerhalb der Übergangsphase II, hier und vorzugsweise zyklisch, die Leerlaufübersetzung i ermittelt wird. Diese Ermittlung basiert hier und vorzugsweise auf einem bekannten Verhalten des Antriebsstrangs 8 bei einer Verstellung des Antriebsstrangzustands. Am Beispiel des oben angesprochenen Riemenvariators kann auf einem bekannten Verhalten der Verstellung des Riemenvariators darauf geschlossen werden, wie sich die Leerlaufübersetzung i im Übergangsbereich II voraussichtlich verändert. Insbesondere kann eine Kennlinie oder ein Kennlinienfeld in der Steuerungseinrichtung 3 hinterlegt sein, die eine entsprechende Abschätzung der Leerlaufübersetzung i im Übergangsbereich II erlaubt. Bei dem in Fig. 2 dargestellten und insoweit bevorzugten Ausführungsbeispiel ist ein zyklisches Nachführen der Leerlaufübersetzung i in vorbestimmten Schritten vorgesehen.

Die in Fig. 2 dargestellte Drehzahlanpassung erfolgt vorzugsweise im Arbeitsbetrieb bei durch die Arbeitsmaschine 1 durchlaufenden Erntegutstrom 2. Abgesehen von den im Arbeitsbetrieb üblichen Belastungsschwankungen, die in Fig. 2d lediglich angedeutet sind, ist die Belastung B des Arbeitsorgans 4 in diesem Beispiel in erster Näherung gleichmäßig, wie insbesondere den Darstellung zu Phase I entnommen werden kann. Die Belastung B ergibt sich aus dem Abweichungswert S, der wie oben erläutert aus den Größen $n_{in}$, $n_{out}$ und i ermittelt worden ist. Dies zeigen insbesondere die Verläufe des Abweichungswerts S und der Belastung B in der Übergangsphase II, die sich aufgrund der treppenförmigen Anpassung der Leerlaufübersetzung i entsprechend sägezahnförmig ergeben.

Nach Erreichen der neuen Drehzahl $n_{out}$ in der Zielphase III ist vorschlagsgemäß eine erneute Ermittlung der Leerlaufübersetzung i vorgesehen. Da sich die Arbeitsmaschine 1 nach wie vor im Arbeitsbetrieb befindet und damit der Antriebsstrang 8 im Lastbetrieb läuft, wird die Ermittlung der Leerlaufübersetzung i hier und vorzugsweise in vorbestimmten Betriebspunkten $b_0$, wie weiter oben erläutert, vorgenommen. Dabei ist es vorzugsweise vorgesehen, die Ermittlung der Leerlaufübersetzung i in solchen Betriebspunkten bo vorzunehmen, in denen die Belastung B ein Belastungsminimum durchläuft. Dies ist einer Zusammenschau der Fig. 2c und 2d zu entnehmen. Im einfachsten Fall wird die Leerlaufübersetzung i in den jeweiligen Betriebspunkten $b_0$ jeweils der realen Übersetzung u gleichgesetzt. Bei der dargestellten und insoweit bevorzugten Ausgestaltung ist es jedoch so, dass in einem ersten Abschnitt 12 der Zielphase III eine Mittelung über die in den Betriebspunkten $b_0$ auftretenden realen Übersetzungen u vorgenommen wird, so dass nach diesem ersten Abschnitt 12 mit einem realitätsnahen, auf diese Mittelung zurückgehenden Wert für die Leerlaufübersetzung i gearbeitet werden kann.

Es darf noch darauf hingewiesen werden, dass mit den Detaildarstellungen in den Fig. 2a-d angedeutet werden soll, dass die betreffenden Werte in der Praxis entsprechenden Schwankungen unterworfen sind. Diese Schwankungen können insbesondere auf entsprechende Schwankungen im Erntegutstrom 2 zurückgehen.

Die Ermittlung der Leerlaufübersetzung i und/oder der Belastung B kann im Rahmen der vorschlagsgemäßen Überwachung zu unterschiedlichen Zeitpunkten vorgenommen werden. Vorzugsweise findet die Ermittlung der Leerlaufübersetzung i und/oder der Belastung B zyklisch, vorzugsweise zeitbasiert statt. Alternativ oder zusätzlich kann die Leerlaufübersetzung i und/oder der Belastungswert B triggerbasiert ermittelt werden. Ein Triggerereignis für die Ermittlung der Leerlaufübersetzung i und/oder der Belastung B kann bspw. eine Änderung der das Arbeitsorgan 4 betreffenden Drehzahl und/oder eine Änderung einer den Hauptantrieb 7 betreffenden Drehzahl sein.

Grundsätzlich kann es vorgesehen sein, dass die Leerlaufübersetzung i und die Belastung B zumindest teilweise asynchron zueinander ermittelt werden. Dies bedeutet, dass die Leerlaufübersetzung b und der Belastungswert B zumindest teilweise zu unterschiedlichen Zeitpunkten ermittelt werden. Für den Fall, dass sich der Antriebsstrangzustand des Antriebsstrangs 8 nicht ändert, kann auch auf eine erneute Ermittlung der Leerlaufübersetzung i verzichtet werden. Diese Situation kann bspw. dadurch erfasst werden, dass bei gleichbleibender den Hauptantrieb 7 betreffenden Drehzahl $n_{in}$ eine gleichbleibende, das Arbeitsorgan 4 betreffende Drehzahl $n_{out}$ ermittelt wird.

Nach einer weiteren Lehre, der eigenständige Bedeutung zukommt, wird die landwirtschaftliche Arbeitsmaschine 1, die für die Ausführung des vorschlagsgemäßen Verfahrens ausgelegt ist, als solche beansprucht. Auf alle Ausführungen, die geeignet sind, die landwirtschaftliche Arbeitsmaschine 1 als solche zu beschreiben, darf verwiesen werden.

Es darf noch darauf hingewiesen werden, dass die Steuerungseinrichtung 3 vorzugsweise einen Speicher aufweist, in dem ein Startwert für die Leerlaufübersetzung i gespeichert ist, die zu einem entsprechenden Start-Antriebsstrangzustand korrespondiert. Dadurch ist sichergestellt, dass bei Aufnahme des Betriebs der Arbeitsmaschine 1 bereits eine Ermittlung der Belastung des Arbeitsorgans 4 basierend auf der gespeicherten Leerlaufübersetzung i möglich ist.

Schließlich darf noch darauf hingewiesen werden, dass die vorschlagsgemäße Lösung unabhängig davon anwendbar ist, ob die das Arbeitsorgan 4 betreffende Drehzahl $n_{out}$ in einem Regelkreis auf einen Sollwert geregelt wird oder nicht. Wesentlich ist lediglich, dass die Leerlaufdrehzahl i in obiger Weise einer Drehzahländerung nachgeführt wird, so dass der Belastungswert B realitätsnah ermittelt wird und entsprechend überwacht werden kann.

**Bezugszeichenliste**

| 1 | Arbeitsmaschine |
| 2 | Erntegutstrom |
| 3 | Steuerungseinrichtung |
| 4 | Arbeitsorgan |
| 5 | Vorsatzgerät |
| 6 | Erntegut |
| 7 | Hauptantrieb |
| 8 | Antriebsstrang |
| 9 | Drehgeber, Drehzahlhauptantrieb |
| 10 | Drehgeber, Drehzahlarbeitsorgan |
| 11 | Mensch-Maschine-Schnittstelle |
| 12 | erster Abschnitt der Zielphase |
| I | Ausgangsphase |
| II | Übergangsphase |
| III | Zielphase |
| $n_{in}$ | Drehzahlhauptantrieb |
| $n_{out}$ | Drehzahlarbeitsorgan |
| u | reale Übersetzung |
| i | Leerlaufübersetzung |
| S | Abweichungswert |
| B | Belastung |
| $b_0$ | Betriebspunkt |

**Patentansprüche**

1. Verfahren zur Ansteuerung einer landwirtschaftlichen Arbeitsmaschine (1), die insbesondere der Aufnahme und Verarbeitung eines Erntegutstroms (2) dient, mit einer Steuerungseinrichtung (3), mit mindestens einem Arbeitsorgan (4) und mit einem Hauptantrieb (7) für den Antrieb des Arbeitsorgans (4), wobei das Arbeitsorgan (4) über einen Antriebsstrang (8) von dem Hauptantrieb (7) angetrieben wird, wobei der Antriebsstrang (8) je nach Antriebsstrangzustand eine reale Übersetzung (u) zwischen dem Hauptantrieb (7) und dem Arbeitsorgan (4) erzeugt,
wobei der Antriebsstrangzustand durch eine fiktive Leerlaufübersetzung (i) repräsentiert wird, und mittels der Steuerungseinrichtung (3) die Belastung des Arbeitsorgans (4) unter Berücksichtigung der jeweiligen Leerlaufübersetzung (i) überwacht wird,
**dadurch gekennzeichnet,**
**dass** bei Identifikation von kritischen Betriebszuständen das Arbeitsorgan (4) betreffende Drehzahlanpassungen in der Weise vorgenommen werden, dass mittels der Steuerungseinrichtung (3) die reale Übersetzung des Antriebsstrangs (8) verstellt wird, und nach erfolgter Drehzahlanpassung die neue Leerlaufübersetzung (i) ermittelt wird.

2. Verfahren nach Anspruch 1, **dadurch gekennzeichnet, dass** zur Ermittlung der Leerlaufübersetzung (i) die Arbeitsmaschine (1) ohne Erntegutstrom (2), insbesondere in einem Vorgewendebereich, betrieben wird und dass die Leerlaufübersetzung (i) aus der in diesem Betrieb ermittelten realen Übersetzung (u) zwischen dem Hauptantrieb (7) und dem Arbeitsorgan (4) ermittelt wird.

3. Verfahren nach einem der vorhergehenden Ansprüche, **dadurch gekennzeichnet, dass** zur Ermittlung der Leerlaufübersetzung (i) die Arbeitsmaschine (1) im Lastbetrieb betrieben wird, und dass die Leerlaufübersetzung (i) basierend auf der realen Übersetzung (u) zwischen dem Hauptantrieb (7) und dem Arbeitsorgan (4) in mindestens einem vorbestimmten Betriebspunkt ($b_0$) ermittelt wird, vorzugsweise, dass der vorbestimmte Betriebspunkt ($b_0$) durch das Absinken der Belastung (B) des Arbeitsorgans (4) unter eine Belastungsgrenze oder durch das Durchlaufen eines Belastungsminimums definiert ist.

4. Verfahren nach einem der vorhergehenden Ansprüche, **dadurch gekennzeichnet, dass** mittels der Steuerungseinrichtung (3) aus einer zuvor ermittelten Leerlaufübersetzung (i) und aus einer vorangegangenen Ansteuerung des Antriebsstrangs (8) eine Veränderung der Leerlaufübersetzung (i) ermittelt wird.

5. Verfahren nach einem der vorhergehenden Ansprüche, **dadurch gekennzeichnet, dass** mittels der Steuerungseinrichtung (3) aus der den Hauptantrieb (7) betreffenden Drehzahl ($n_{in}$), der das Arbeitsorgan (4) betreffenden Drehzahl ($n_{out}$) und der Leerlaufübersetzung (i) ein Abweichungswert (S) für die Abweichung der realen Übersetzung (u) von der Leerlaufübersetzung (i) ermittelt wird, vorzugsweise, dass der Abweichungswert (S) zumindest über einen Betriebsbereich proportional zu der Belastung (B) des Arbeitsorgans (4) ist.

6. Verfahren nach einem der vorhergehenden Ansprüche, **dadurch gekennzeichnet, dass** der Antriebsstrang (8) mindestens eine Getriebekomponente zur Erzeugung einer Getriebeübersetzung aufweist.

7. Verfahren nach Anspruch 6, **dadurch gekennzeichnet, dass** die Getriebekomponente mittels der Steuerungseinrichtung (3) zur Verstellung der Getriebeübersetzung ansteuerbar ist.

8. Verfahren nach einem der vorhergehenden Ansprüche 6 oder 7, **dadurch gekennzeichnet, dass** die Getriebekomponente ein Riementrieb mit einer dem Hauptantrieb (7) zugeordneten Antriebsscheibe und einer dem Arbeitsorgan (4) zugeordneten Abtriebsscheibe ist und dass der Antriebsscheibe und/oder der Abtriebsscheibe ein Riemenvariator zur Verstellung der Getriebeübersetzung zugeordnet ist.

9. Verfahren nach einem der vorhergehenden Ansprüche, **dadurch gekennzeichnet, dass** mittels der Steuerungseinrichtung (3), insbesondere auf die Identifikation vorbestimmter, kritischer Betriebszustände hin, eine Abschaltung des Hauptantriebs (7) ausgelöst wird.

10. Verfahren nach einem der vorhergehenden Ansprüche, **dadurch gekennzeichnet, dass** basierend auf der ermittelten Belastung (B) mindestens eine Belastungsinformation über eine Mensch-Maschine-Schnittstelle (11) ausgegeben wird.

11. Verfahren nach einem der vorhergehenden Ansprüche, **dadurch gekennzeichnet, dass** ein vorbestimmter kritischer Betriebszustand das Über- oder Unterschreiten eines vorbestimmten Grenzwerts für die Belastung (B) des Arbeitsorgans (4) umfasst.

12. Verfahren nach einem der vorhergehenden Ansprüche, **dadurch gekennzeichnet, dass** die Änderung einer das Arbeitsorgan (4) betreffenden Drehzahl ($n_{out}$) durch eine Ansteuerung des Antriebsstrangs (8) innerhalb einer zeitlichen Übergangsphase (II) abläuft und dass innerhalb der Übergangsphase (II), insbesondere zyklisch, die Leerlaufübersetzung (i) und darauf basierend die Belastung (B) des Arbeitsorgans (4) ermittelt werden.

13. Verfahren nach einem der vorhergehenden Ansprüche, **dadurch gekennzeichnet, dass** die Leerlaufübersetzung (i) und/oder die Belastung (B) zyklisch und/oder triggerbasiert ermittelt wird bzw. werden, vorzugsweise, dass ein Triggerereignis für die Ermittlung der Leerlaufübersetzung (i) und/oder der Belastung (B) eine Änderung der das Arbeitsorgan (4) betreffenden Drehzahl ($n_{out}$) ist.

14. Verfahren nach einem der vorhergehenden Ansprüche, **dadurch gekennzeichnet, dass** die Leerlaufübersetzung (i) und die Belastung (B) zumindest teilweise asynchron zueinander ermittelt werden.

15. Landwirtschaftliche Arbeitsmaschine (1), insbesondere zur Aufnahme und Verarbeitung eines Erntegutstroms (2), mit einer Steuerungseinrichtung (3), mit mindestens einem Arbeitsorgan (4) und mit einem Hauptantrieb (7) für den Antrieb des Arbeitsorgans (4), wobei das Arbeitsorgan (4) über einen Antriebsstrang (8) von dem Hauptantrieb (7) angetrieben wird,
   wobei der Antriebsstrang (8) je nach Antriebsstrangzustand eine reale Übersetzung (u) zwischen dem Hauptantrieb (7) und dem Arbeitsorgan (4) erzeugt, wobei der Antriebsstrangzustand durch eine fiktive Leerlaufübersetzung (i) repräsentiert wird, und mittels der Steuerungseinrichtung (7) die Belastung (B) des Arbeitsorgans (4) unter Berücksichtigung der jeweiligen Leerlaufübersetzung (i) überwacht wird,
   **dadurch gekennzeichnet,**
   **dass** bei Identifikation von kritischen Betriebszuständen das Arbeitsorgan (4) betreffende Drehzahlanpassungen in der Weise vorgenommen werden, dass mittels der Steuerungseinrichtung (3) die reale Übersetzung des Antriebsstrangs (8) verstellt wird, und nach erfolgter Drehzahlanpassung die neue Leerlaufübersetzung (i) ermittelt wird.

## Claims

1. A method of actuating an agricultural working machine (1) which serves in particular to pick up and process a flow of crop material (2), comprising a control device (3), at least one working member (4) and a main drive (7) for driving the working member (4), wherein the working member (4) is driven by the main drive (7) by way of a drive train (8),
   wherein depending on the respective drive train state the drive train (8) produces a real transmission ratio (u) between the main drive (7) and the working member (4),
   wherein the drive train state is represented by a notional no-load transmission ratio (i) and the loading on the working member (4) is monitored by means of the control device (3) having regard to the respective no-load transmission ratio (i),
   **characterised in that** upon identification of critical operating states rotary speed adaptations concerning the working member (4) are effected in such a way that the real transmission ratio of the drive train (8) is adjusted by means of the control device (3) and the new no-load transmission ratio (i) is ascertained after rotary speed adaptation has been effected.

2. A method according to claim 1 **characterised in that** for ascertaining the no-load transmission ratio (i) the working machine (1) is operated without a flow of crop material (2), in particular in a headland region, and the no-load transmission ratio (i) is ascertained from the real transmission ratio (u) ascertained in such operation between the main drive (7) and the working member (4).

3. A method according to one of the preceding claims **characterised in that** to ascertain the no-load transmission ratio (i) the working machine (1) is operated in the load mode of operation and the no-load transmission ratio (i) is ascertained based on the real transmission ratio (u) between the main drive (7) and the working member (4) in at least one predetermined operating point ($b_0$), and preferably that the predetermined operating point ($b_0$) is defined by the reduction in the loading (B) on the working member (4) below a loading limit or by passing through a loading minimum.

4. A method according to one of the preceding claims **characterised in that** a variation in the no-load transmission ratio (i) is ascertained by means of the control device (3) from a previously ascertained no-load transmission ratio (i) and from a preceding actuation of the drive train (8).

5. A method according to one of the preceding claims **characterised in that** a deviation value (S) for the deviation of the real transmission ratio (u) from the no-load transmission ratio (i) is ascertained by means of the control device (3) from the rotary speed ($n_{in}$) concerning the main drive, the rotary speed ($n_{out}$) concerning the working member (4) and the no-load transmission ratio (i), and preferably that the deviation value (S) is proportional to the loading (B) on the working member (4) at least over an operating range.

6. A method according to one of the preceding claims **characterised in that** the drive train (8) has at least one transmission component for producing a transmission ratio.

7. A method according to claim 6 **characterised in that** the transmission component is controllable by means of the control device (3) for adjusting the transmission ratio.

8. A method according to one of claims 6 and 7 **characterised in that** the transmission component is a belt drive having a drive pulley associated with the main drive (7) and a driven pulley associated with the working member (4) and a belt variator for adjusting the transmission ratio is associated with the drive pulley and/or the driven pulley.

9. A method according to one of the preceding claims **characterised in that** shut-down of the main drive (7) is triggered by means of the control device (3), in particular in response to the identification of predetermined critical operating states.

10. A method according to one of the preceding claims **characterised in that** at least one item of loading information is output by way of a man-machine interface (11) based on the ascertained loading (B).

11. A method according to one of the preceding claims **characterised in that** a predetermined critical operating state includes rising above or falling below a predetermined limit value for the loading (B) on the working member (4).

12. A method according to one of the preceding claims **characterised in that** the change in a rotary speed ($n_{out}$) concerning the working member (4) takes place by actuation of the drive train (8) within a time transition phase (II) and within the transition phase (II), in particular cyclically, the no-load transmission ratio (i) and based thereon the loading (B) on the working member (4) are ascertained.

13. A method according to one of the preceding claims **characterised in that** the no-load transmission ratio (i) and/or the loading (B) is or are ascertained cyclically and/or trigger-based, and preferably a trigger event for ascertaining the no-load transmission ratio (i) and/or the loading (B) is a change in the rotary speed ($n_{out}$) concerning the working member (4).

14. A method according to one of the preceding claims **characterised in that** the no-load transmission ratio (i) and the loading (B) are ascertained at least partially in mutually asynchronous relationship.

15. An agricultural working machine (1), in particular for picking up and processing a flow of crop material (2), comprising a control device (3), at least one working member (4) and a main drive (7) for driving the working member (4), wherein the working member (4) is driven by the main drive (7) by way of a drive train (8), wherein depending on the respective drive train state the drive train (8) produces a real transmission ratio (u) between the main drive (7) and the working member (4),
wherein the drive train state is represented by a notional no-load transmission ratio (i) and the loading (B) on the working member (4) is monitored by means of the control device (7) having regard to the respective no-load transmission ratio (i),
**characterised in that** upon identification of critical operating states rotary speed adaptations concerning the working member (4) are effected in such a way that the real transmission ratio of the drive train (8) is adjusted by means of the control device (3) and the new no-load transmission ratio (i) is ascertained after rotary speed adaptation has been effected.

## Revendications

1. Procédé de commande d'une machine de travail agricole (1) qui sert en particulier à ramasser et traiter un flux de récolte (2), comprenant un équipement de commande (3), comprenant au moins un organe de travail (4) et comprenant un moyen d'entraînement principal (7) pour l'entraînement de l'organe de travail (4), l'organe de travail (4) étant entraîné par le moyen d'entraînement principal (7) par l'intermédiaire d'une chaîne de transmission (8), la chaîne de transmission (8) générant, selon l'état de la chaîne de transmission, un rapport de transmission réel (u) entre le moyen d'entraînement principal (7) et l'organe de travail (4), l'état de la chaîne de transmission étant représenté par une transmission fictive en marche à vide (i), et la charge de l'organe de travail (4) étant surveillée au moyen de l'équipement de commande (3) en tenant compte du rapport de transmission en marche à vide respectif (i), **caractérisé en ce qu'**en cas d'identification d'états de fonctionnement critiques, des adaptations de vitesse de rotation concernant l'organe de travail (4) sont entreprises de façon à régler le rapport de transmission réel de la chaîne de transmission (8) au moyen de l'équipement de commande (3) et, à l'issue de l'adaptation de vitesse de rotation, à déterminer le nouveau rapport de transmission en marche à vide (i).

2. Procédé selon la revendication 1, **caractérisé en ce que**, pour déterminer le rapport de transmission en marche à vide (i), la machine de travail (1) est opérée sans flux de récolte (2), en particulier dans une zone de tournière, et **en ce que** le rapport de transmission en marche à vide (i) est déterminé à partir du rapport de transmission réel (u) déterminé dans ce fonctionnement entre le moyen d'entraînement principal (7) et l'organe de travail (4).

3. Procédé selon une des revendications précédentes, **caractérisé en ce que**, pour déterminer le rapport de transmission en marche à vide (i), la machine de travail (1) est opérée en fonctionnement en charge, et **en ce que** le rapport de transmission en marche à vide (i) est déterminé sur la base du rapport de transmission réel (u) entre le moyen d'entraînement principal (7) et l'organe de travail (4) en au moins un point de fonctionnement prédéterminé $(b_0)$, de préférence **en ce que** le point de fonctionnement prédéterminé $(b_0)$ est défini par la baisse de la charge (B) de l'organe de travail (4) en dessous d'une limite de charge ou par le franchissement d'un minimum de charge.

4. Procédé selon une des revendications précédentes, **caractérisé en ce que**, au moyen de l'équipement de commande (3), une modification du rapport de transmission en marche à vide (i) est déterminée à partir d'un rapport de transmission en marche à vide préalablement déterminé (i) et à partir d'une commande antérieure de la chaîne de transmission (8).

5. Procédé selon une des revendications précédentes, **caractérisé en ce que**, au moyen de l'équipement de commande (3), une valeur de déviation (S) est déterminée pour la déviation du rapport de transmission réel (u) par rapport au rapport de transmission en marche à vide (i) à partir de la vitesse de rotation $(n_{in})$ concernant le moyen d'entraînement principal (7), de la vitesse de rotation $(n_{out})$ concernant l'organe de travail (4) et du rapport de transmission en marche à vide (i), de préférence **en ce que** la valeur de déviation (S) est proportionnelle à la charge (B) de l'organe de travail (4) au moins sur une plage de fonctionnement.

6. Procédé selon une des revendications précédentes, **caractérisé en ce que** la chaîne de transmission (8) comprend au moins un composant de boîte de vitesses pour générer un rapport de transmission de boîte de vitesses.

7. Procédé selon la revendication 6, **caractérisé en ce que** le composant de boîte de vitesses est commandable au moyen de l'équipement de commande (3) pour régler le rapport de transmission de boîte de vitesses.

8. Procédé selon une des revendications précédentes 6 ou 7, **caractérisé en ce que** le composant de boîte de vitesses est un entraînement à courroie comprenant une poulie menante associée au moyen d'entraînement principal (7) et une poulie menée associée à l'organe de travail (4), et **en ce qu'**à la poulie menante et/ou à la poulie menée est associé un variateur à courroie pour régler le rapport de transmission de boîte de vitesses.

9. Procédé selon une des revendications précédentes, **caractérisé en ce qu'**au moyen de l'équipement de commande (3), en particulier pour identifier des états de fonctionnement critiques prédéterminés, est déclenchée une désactivation du moyen d'entraînement principal (7).

10. Procédé selon une des revendications précédentes, **caractérisé en ce que** sur la base de la charge déterminée (B), au moins une information de charge est éditée par l'intermédiaire d'une interface homme-machine (11).

11. Procédé selon une des revendications précédentes, **caractérisé en ce qu'**un état de fonctionnement critique prédéterminé inclut le surpassement ou le soupassement d'une valeur limite prédéterminée pour la charge (B) de l'organe de travail (4).

12. Procédé selon une des revendications précédentes, **caractérisé en ce que** la modification d'une vitesse de rotation ($n_{out}$) concernant l'organe de travail (4) par l'intermédiaire d'une commande de la chaîne de transmission (8) se déroule durant une phase de transition temporelle (II), et **en ce que**, durant la phase de transition (II), le rapport de transmission en marche à vide (i) et, sur la base de celui-ci, la charge (B) de l'organe de travail (4) sont déterminés, en particulier cycliquement.

13. Procédé selon une des revendications précédentes, **caractérisé en ce que** le rapport de transmission en marche à vide (i) et/ou la charge (B) est déterminé, respectivement sont déterminés cycliquement et/ou sur la base de déclencheurs, de préférence **en ce qu'**un événement déclencheur pour la détermination du rapport de transmission en marche à vide (i) et/ou de la charge (B) est une modification de la vitesse de rotation ($n_{out}$) concernant l'organe de travail (4).

14. Procédé selon une des revendications précédentes, **caractérisé en ce que** le rapport de transmission en marche à vide (i) et la charge (B) sont déterminés au moins en partie de manière asynchrone l'un par rapport à l'autre.

15. Machine de travail agricole (1), en particulier pour ramasser et traiter un flux de récolte (2), comprenant un équipement de commande (3), comprenant au moins un organe de travail (4) et comprenant un moyen d'entraînement principal (7) pour l'entraînement de l'organe de travail (4), l'organe de travail (4) étant entraîné par le moyen d'entraînement principal (7) par l'intermédiaire d'une chaîne de transmission (8), la chaîne de transmission (8) générant, selon l'état de la chaîne de transmission, un rapport de transmission réel (u) entre le moyen d'entraînement principal (7) et l'organe de travail (4), l'état de la chaîne de transmission étant représenté par une transmission fictive en marche à vide (i), et la charge (B) de l'organe de travail (4) étant surveillée au moyen de l'équipement de commande (3) en tenant compte du rapport de transmission en marche à vide respectif (i), **caractérisé en ce qu'**en cas d'identification d'états de fonctionnement critiques, des adaptations de vitesse de rotation concernant l'organe de travail (4) sont entreprises de façon à régler le rapport de transmission réel de la chaîne de transmission (8) au moyen de l'équipement de commande (3) et, à l'issue de l'adaptation de vitesse de rotation, à déterminer le nouveau rapport de transmission en marche à vide (i).

Fig. 1

12

Fig. 2

**EP 3 165 077 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5855108 A
- GB 911361 A